(19) Europäisches Patentamt / European Patent Office / Office européen des brevets

(11) **EP 2 234 994 B1**

(12) **EUROPEAN PATENT SPECIFICATION**

(45) Date of publication and mention of the grant of the patent:
**27.09.2017 Bulletin 2017/39**

(21) Application number: **07868087.3**

(22) Date of filing: **27.12.2007**

(51) Int Cl.:
*C10L 11/02* *(2006.01)*    *C10L 1/02* *(2006.01)*

(86) International application number:
**PCT/US2007/026410**

(87) International publication number:
**WO 2009/085033 (09.07.2009 Gazette 2009/28)**

(54) **FATTY ACID BUTYL ESTER BLENDS**

FETTSÄURE BUTYL ESTER MISCHUNGEN

MÉLANGES D'ESTERS BUTYLIQUES D'ACIDES GRAS

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**06.10.2010 Bulletin 2010/40**

(73) Proprietor: **Cibus Europe B.V.**
**4421 Ad Kapelle (NL)**

(72) Inventors:
 • **KNUTH, Mark, E.**
 **Poway**
 **CA 92064 (US)**
 • **BEETHAM, Peter, R.**
 **Carlsbad**
 **CA 92011 (US)**
 • **WALKER, Keith, A.**
 **San Diego**
 **CA 92130 (US)**
 • **KUEBITZ, Bernhard, D.**
 **Poway**
 **CA 92064 (US)**

(74) Representative: **Zimmermann & Partner**
**Patentanwälte mbB**
**Postfach 330 920**
**80069 München (DE)**

(56) References cited:
EP-A2- 1 224 924       WO-A2-2008/002643
US-A- 3 870 733        US-A- 4 064 058
US-A- 4 729 769        US-A- 5 389 113
US-A- 6 117 827        US-A1- 2002 134 007

US-A1- 2004 106 813    US-A1- 2005 208 162
US-A1- 2007 232 817    US-B1- 6 183 524
US-B2- 6 835 408

• PHIPPEN W B ET AL: "Total seed oil and fatty acid methyl ester contents of Cuphea accessions", INDUSTRIAL CROPS AND PRODUCTS, ELSEVIER, NL, vol. 24, no. 1, 1 July 2006 (2006-07-01), pages 52-59, XP025141944, ISSN: 0926-6690, DOI: 10.1016/J.INDCROP.2006.02.001 [retrieved on 2006-07-01]
• 'Caprylic Capric Special' BHUTA INTEMATIONAL 2006, page 2
• CERA, K.R. ET AL.: 'Evaluation of various extracted vegetable oils, roasted soybeans, medium- chain triglyceride and an animal-vegetable fat blend for postweaning swine' JOURNAL OF ANIMAL SCIENCE vol. 68, 1990, pages 2756 - 2765, XP002002740
• DUXBURY, DEAN D.: 'Genetic Engineering Alters Fat Composition of Canola Oil' FOOD PROCESSING, [Online] 01 August 1992, page 1, XP008138192 Retrieved from the Internet: <URL:www.allbusiness.com/manufacturing/foo d -manufacturing/320968-1.html>
• X Lang ET AL: "Preparation and characterization of bio-diesels from various bio-oils", Bioresource Technology, vol. 80, no. 1, 1 October 2001 (2001-10-01), pages 53-62, XP055045299, ISSN: 0960-8524, DOI: 10.1016/S0960-8524(01)00051-7

• Hannu Jääskeläinen: "Low Temperature Operability of Biodiesel", DieselNet Technology Guide > Alternative Diesel Fuels > Biodiesel, 1 May 2009 (2009-05-01), XP055138408, Retrieved from the Internet: URL:https://www.dieselnet.com/tech/fuel_biodiesel_lowtemp.php [retrieved on 2014-09-05]

• KNOTHE ET AL: "Dependence of biodiesel fuel properties on the structure of fatty acid alkyl esters", FUEL PROCESSING TECHNOLOGY, ELSEVIER BV, NL, vol. 86, no. 10, 25 June 2005 (2005-06-25) , pages 1059-1070, XP027621878, ISSN: 0378-3820 [retrieved on 2005-06-25]

**Description**

Vegetable oils have been used as alternative fuels and feedstocks for the production of biodiesels. Generally the oils used are extracted from plants grown in large quantity in a particular region. Therefore, soybean oil is of interest as a source of biodiesel in the United States, whereas rapeseed oil is of interest in European countries; and countries having tropical climates utilize coconut oil or palm oil (Knothe et al., published on-line at www.biodiesel.org/resources/reportsdatabase/reports/gen/19961201_gen-162.pdf).

A composition of triglycerides simulating the oil from VS-320, a mutant *Cuphea viscossima,* is disclosed by Geller et al. (Transactions of the American Society of Agricultural Engineers 42:859-862, 1999). The "simulated analogue of VS-320 oil" disclosed in Geller has a triglyceride composition of 4.2% C6:0; 40.20% C8:0; 36.90% C10:0; 4.80% C12:0; 6.80% C14:0; 3.33% C16:0; 0.00 % C18:0; 1.37% C18:1; 2.05% C18:2; and 0.00% C18:3 (see Table 1). Geller et al., (1999) concluded that "[t]his model suggests that an increase in the C8:0 content of vegetable oils along with a subsequent reduction in medium- and long-chain triglycerides may result in a more efficient, better performing alternative diesel fuel."

Stournas, et al., (JACOS, 1995, 72:433-437) discloses characteristics of various oils as fuels and states "[g]iven the $\pm 3°C$ repeatability of pour point determinations, most of the added components did not appear to affect the -12°C pour point of the base fuel to a significant degree. The major exceptions are the saturated fatty alcohols with $C_{12}$ and longer alkyl chains, which increase the pour point substantially; minor negative effects were also observed with some of the longer-chain esters. It is worth noticing that the presence of the double bond in all oleate derivatives sharply improves their cold flow behavior in comparison to the corresponding stearates" and "[w]hen both ignition quality and cold flow behavior are taken into account, the tertiary dimethylamines are the best performers; however, the tertiary amides also appear to be interesting prospects, in that their preparation from the glycerides of natural vegetable oils may be much simpler than that of the amines, as some recent studies have shown."

Mittelbach (Bioresource Technology, 1996, 56:7-11) discusses specifications and quality control of diesel fuel derived from vegetable oils and states "[o]ne parameter which has not yet been included in the Austrian standards for RME, but might be necessary when defining general standards for fatty acid methyl esters is the iodine number, which describes the content of unsaturated fatty acids and is only dependent on the origin of the vegetable oil. In Germany a value of 115 is defined, which corresponds to rapeseed oil, but would exclude different kinds of oils, like sunflower oil and soybean oil. A limitation of unsaturated fatty acids may be necessary, due to the fact that heating higher unsaturated fatty acids results in polymerization of glycerides. This can lead to the formulation of deposits or to deterioration of the lubricating oil. This effect increases with the number of double bonds in the fatty acid chain. Therefore, it seems better to limit the content of higher unsaturated fatty acids like linolenic acid, than to limit the degree of unsaturation with the iodine number."

Graboski (Prog. Energy Combustion Sci., 1998, 24:125-164) discusses "the statues of fat and oil derived diesel fuels with respect to fuel properties, engine performance, and emissions" and states "[r]educing chain length and/or increasing chain branching would improve the cold flow properties of the fuel. Chain length and degree of branching might be altered through both plant breeding or genetic engineering approaches, as well as through chemical processing of the biodiesel to cleave certain double bonds or to form branched isomers. Very little practical research has been done in the chemical processing area. The cold flow properties of biodiesel fuels are clearly an area in need of considerable research."

Goodrum et al., (Bioresource Technology, 1996, 56:55-60) discusses "physical properties of low molecular weight triglycerides for the development of bio-diesel fuel models" and states "[o]ils which contain significant fractions of low molecular weight triglycerides might be suitable for direct use as fuel extenders. In fact, feedstock from *Cuphea* species (Graham, 1989), contains oils predominantly composed of these triglycerides (particularly tricaprylin and tricaprin). Modem DNA transfer technologies might also afford the transfer of genes that control the synthesis of low molecular weight triglycerides from species such as *Cuphea* into other more well-established oilseed crops. Oil composition could then be genetically modified for the optimal desired biodiesel properties."

Knothe (Fuel Processing Technology, 2005, 86:1059-1070) states "[s]aturated fatty compounds have significantly higher melting points than unsaturated fatty compounds (Table 1) and in a mixture they crystallize at higher temperature than the unsaturates. Thus biodiesel fuels derived from fats or oils with significant amounts of saturated fatty compounds will display higher cloud points and pour points."

Kinney et al., (Fuel Processing Technology, 2005, 86:1137-1147) discusses issues regarding modification of soybean oil for enhanced performance biodiesel blends. This article references the blends disclosed in Geller et al., 1999 and states "since the melting point of biodiesel derived from these short-chain fatty acids is fairly high, additional winterization steps would be required to improve cold flow properties." Kinney *et al.* also states "[a]lterations in the fatty acid profile that increase the saturated fatty acid content will augment oxidative stability but worsen cold flow ... the presence of double bonds in fatty acids will lower the cetane number; hence, strategies to shift the fatty pool of a vegetable oil towards saturated moieties will improve ignition quality of the derived biodiesel, but as with oxidative stability may compromise cold flow properties."

U.S. Patent No. 4,364,743 ("the '743 patent") discloses "a synthetic fuel of fatty acid esters [that] provides a novel source of energy when burned alone or in combination with other known fuels," and that "[e]sters are preferably prepared by a transesterification reaction using various oils such as soya oil, palm oil, safflower oil, peanut oil, corn oil, cottonseed oil, linseed oil, oiticica oil, tung oil, coconut oil, castor oil, perilla oil, rapeseed oil, sunflower oil, lard, tallow, fish oils, blubber, lipids from marine and land animals and lipids from vegetable sources."

U.S. Patent No. 5,389,113 ("the '113 patent") discloses "mixtures containing a) 58 to 95% by weight of at least one ester with an iodine value of 50 to 150 derived from fatty acids containing 12 to 22 carbon atoms and lower aliphatic alcohols containing 1 to 4 carbon atoms, b) 4 to 40% by weight of at least one ester of fatty acids containing 6 to 14 carbon atoms and lower aliphatic alcohols containing 1 to 4 carbon atoms and c) 0.1 to 2% by weight of at least one polymeric ester."

US Patent Application Publication No. 2006026963 discloses "nucleic acid constructs and methods for producing altered seed oil compositions" and states "a method to enhance oleic acid content and reduce saturated fatty acid content in a plant seed comprising i) shortening the length of a first heterologous FAD2 sequence until the amount of FAD2 gene suppression from a plant transformed with the first heterologous FAD2 sequence is at least partially reduced relative to the amount of FAD2 gene suppression in a plant cell comprising a similar genetic background and a second heterologous FAD2 sequence, wherein the second heterologous FAD2 sequence consists of more endogenous FAD2 sequence than the first heterologous FAD2 sequence; ii) expressing a heterologous FATB sequence capable of at least partially reducing FATB gene expression in a plant cell relative to the suppression of FATB in a plant cell with a similar genetic background but without the heterologous FATB sequence; iii) growing a plant comprising a genome with the first heterologous FAD2 sequence and the heterologous FATB sequence; and iv) cultivating a plant that produces seed with a reduced saturated fatty acid content relative to seed from a plant having a similar genetic background but lacking the first heterologous FAD2 sequence and the heterologous FATB sequence."

WO 2008/002643 (published January 3, 2008) relates to a mixture of fatty acids comprising 80% to 100% saturated fatty acids having 8-12 carbons and monounsaturated fatty acids having 12-18 carbons; 5% to 80% caprylic acid (C8:0) and capric acid (C10:0), and less than 20% lauric acid (C12:0); wherein the monounsaturated fatty acids account for 5% to 95% by weight of the mixture; and the mixture comprises less than 20% polyunsaturated fatty acids and saturated fatty acids having more than 12 carbons. The fatty acids may be converted to fatty acid alkyl esters.

Phippen, W.B., et al., "Total seed oil and fatty acid methyl ester contents of Cuphea accessions" (Industrial Crops and Products, Elsevier, NL, Vol. 24, No. 1, pages 52-59, July 1, 2006), determines the fatty acids may be converted to fatty acid alkyl esters, wherein for the determination by gas chromatography, the triglycerides are converted to methyl esters.

## SUMMARY OF THE INVENTION

Subject matter of the present invention is a mixture of fatty acids as defined in claim 1. The dependent claims relate to preferred embodiments thereof. Further subject matter of the invention is a biodiesel blend as defined in claim 12, which blend comprises the mixture of fatty acids according to the present invention, and a petroleum diesel.

Applicant has determined that blends of vegetable oils can be chosen so that the blend exhibits desirable properties for use as alternative fuels or as feedstocks for the production of a biodiesel. For example, such blends may be chosen so that, when used as a fuel in a cold climate, the blend is less likely to freeze. Blends may also be chosen so that the blend is stable at higher temperatures. Further, blends may be chosen to achieve desirable ignition properties when used as a fuel in a vehicle. Some particular examples of features of the blends of fatty acids of the invention are described below. It is understood that the blends of fatty acids within the invention may have any combination of the features described in the below embodiments. In particular the Inventors have determined that certain mixtures of fatty acids have surprisingly beneficial properties for production of biofuels. For example, the Inventors have found that particular balances of medium chain fatty acids and monounsaturated fatty acids can have surprisingly beneficial properties, for example with respect to cold weather capabilities. In certain embodiments of the fatty acid mixtures having balanced amounts of medium chain fatty acids (for example C8, C10 and C12) and monounsaturated fatty acids (preferably C16:1 and C18:1), Inventors have found that the presence C16:0 and C18:0 can have particularly unfavorable effects on cold flow properties and therefore reduced levels of C16:0 and C18:0 in a biodiesel can be beneficial for cold weather capabilities; and that C14:0, C18:2, C18:3, C20, C22 and C24 can also adversely effect cold flow properties; thus, reducing these fatty acids in a biodiesel can also be beneficial. It has also been discovered that certain alkyl esters of oils, blends of oils, and blends of fatty acids have particularly favorable effects on cold flow properties, whereas other alkyl esters are less beneficial.

The term "oil" as used herein, refers to a substance composed primarily of triglycerides of fatty acids. Vegetable oils may be extracted from various parts of the plant, including the seeds, fruit, or leaves of plants. It is generally liquid at room temperatures. In some embodiments the oils are derived from canola, rapeseed, palm, palm kernel, coconut, tucum, sunflower, safflower, olive, macadamia, babassu, castor, peanut, cotton, flaxseed, linseed, cohune, and jatropha. In further embodiments, the oils may be derived from a genetically modified plant.

Triglycerides are the main constituents of vegetable oils and animal fats. Triglycerides may be solid or liquid at room temperature. A triglyceride, also called triacylglycerol (TAG), is a chemical compound formed from one molecule of glycerol and three fatty acids. Glycerol is a trihydric alcohol (containing three hydroxyl groups) that can combine with up to three fatty acids to form monoglycerides, diglycerides, and triglycerides, when combined with one, two or three fatty acids, respectively. Monoglycerides, diglycerides, and triglycerides are classified as esters, which are compounds created by the reaction between acids and alcohols that release water as a by-product. Fatty acids may combine with any of the three hydroxyl groups to form and ester linkage and create a wide diversity of compounds. Further, fatty acids having different lengths may combine with an individual glycerol molecule. Thus the resulting diglyceride or triglyceride may comprise different fatty acids within the same triglyceride molecule.

Fatty acids are composed of carbon, hydrogen, and oxygen arranged as a carbon chain skeleton with a carboxyl group at one end. Fatty acids may be saturated fatty acids (SFAs) and have no carbon-carbon double bonds, monounsaturated (MUFAs) and have one carbon-carbon double bond, or polyunsaturated fatty acids (PUFAs) and have more than one carbon-carbon double bond. The number of carbons in a fatty acid chain and the number of carbon-carbon double bonds is commonly expressed as "number of carbons : number of carbon-carbon double bonds." For example, oleic acid, which has 18 carbons and one double bond, can be expressed as "C18:1" or "18:1."

"Medium chain fatty acids" as used herein refers to fatty acids containing 6 to 14 carbons, preferably 8 to 12 carbons.

"Long chain fatty acids" as used herein refers to fatty acids containing more than 14 carbons, or more that 16 carbons, or even more than 18 carbons.

In one aspect, mixtures of fatty acids are provided.

In certain preferred embodiments of the mixtures of fatty acids provided herein, lauric acid accounts for 6% to 20% of the mixture; more preferably 6% to 10% of the mixture.

In certain preferred embodiments of the mixtures of fatty acids provided herein, caprylic acid (C8:0), capric acid (C10:0), and lauric acid (C12:0) together account for between 20% and 40% of the mixture; or between 20% and 30% of the mixture; or between 30% and 40% of the mixture; or between 25% and 35% of the mixture. In other of embodiments of the mixtures of fatty acids provided herein, caprylic acid (C8:0), capric acid (C10:0), and lauric acid (C12:0) together account for between 60% and 85% of the mixture; or between 60% and 70% of the mixture; or between 70% and 85% of the mixture; or between 65% and 75% of the mixture. In yet other of embodiments of the mixtures of fatty acids provided herein, caprylic acid (C8:0), capric acid (C10:0), and lauric acid (C12:0) together account for between 40% and 60% of the mixture; or between 40% and 50% of the mixture; or between 50% and 60% of the mixture; or between 45% and 55% of the mixture.

In some preferred embodiments of the mixtures of fatty acids provided herein, monounsaturated fatty acids account for more than 10%, or more than 15%; or more than 20%; or more than 25%; or more than 30%; or more than 35%; or more than 40%; or more than 45; or more than 50%; or more than 60%; or more than 65% ; or more than 70%; or more than 80%; or more than 85% of the mixture.

In certain preferred embodiments of the mixtures of fatty acids provided herein, oleic acid (C18:1) and palmitoleic acid (16:1) together account for between 20% and 85% of the mixture; or between 20% and 40% of the mixture; or between 20% and 30% of the mixture; or between 30% and 40% of the mixture; or between 25% and 35% of the mixture; or between 40% and 60% of the mixture; or between 35% and 55% of the mixture; or between 55% and 65% of the mixture; or between 60% and 85% of the mixture; or between 60% and 70% of the mixture; or between 70% and 85% of the mixture; or between 65% and 75% of the mixture.

In some preferred embodiments of the mixtures of fatty acids provided herein, caprylic acid (C8:0), capric acid (C10:0), lauric acid (C12:0), oleic acid (C18:1) and palmitoleic acid (16:1) together account for more than 50% of the mixture; or more than 55% of the mixture; or more than 60% of the mixture; or more than 65% of the mixture; or more than 70% of the mixture; or more than 75% of the mixture; or more than 80% of the mixture; or more than 85% of the mixture; or more than 90% of the mixture.

In some preferred embodiments of the mixtures of fatty acids provided herein, stearic (18:0) and palmitic acid (16:0) together account for less than 25% of the mixture; more preferably less than 15% of the mixture; more preferably less than 10% of the mixture; more preferably less than 8% of the mixture; more preferably less than 6% of the mixture; more preferably less than 5% of the mixture; more preferably less than 4% of the mixture; more preferably less than 3% of the mixture; more preferably less than 2% of the mixture; or less than 1% of the mixture; or less than 0.5% of the mixture; or in some preferred embodiments the mixture of fatty acids are substantially free of stearic (18:0) and palmitic acid (16:0).

In some preferred embodiments of the mixtures of fatty acids provided herein, myristic acid (14:0) accounts for less than 25% of the mixture; more preferably less than 15% of the mixture; more preferably less than 10% of the mixture; more preferably less than 8% of the mixture; more preferably less than 6% of the mixture; more preferably less than 5% of the mixture; more preferably less than 4% of the mixture; more preferably less than 3% of the mixture; more preferably less than 2% of the mixture; or less than 1% of the mixture; or less than 0.5% of the mixture; or in some preferred embodiments the mixture of fatty acids are substantially free of myristic acid (14:0).

According to the present invention, linoleic acid (18:2) and linolenic acid (18:3) together account for less than 3% of the mixture; preferably less than 2% of the mixture; or less than 1% of the mixture; or less than 0.5% of the mixture; or in some preferred embodiments the mixture of fatty acids are substantially free of linoleic acid (18:2) and linolenic acid (18:3).

In some preferred embodiments of the mixtures of fatty acids provided herein, arachidic acid (C20:0), behenic acid (C22:0) and lignoceric acid (C24:0) together account for less than 25% of the mixture; more preferably less than 15% of the mixture; more preferably less than 10% of the mixture; more preferably less than 8% of the mixture; more preferably less than 6% of the mixture; more preferably less than 5% of the mixture; more preferably less than 4% of the mixture; more preferably less than 3% of the mixture; more preferably less than 2% of the mixture; or less than 1% of the mixture; or less than 0.5% of the mixture; or in some preferred embodiments the mixture of fatty acids are substantially free of arachidic acid (C20:0), behenic acid (C22:0) and lignoceric acid (C24:0).

According to the present invention, a mixture of fatty acids is provided wherein saturated fatty acids having 8-12 carbons and monounsaturated fatty acids having 12-18 carbons account for between 80% and 100% of the mixture, caprylic acid (C8:0) and capric acid (C10:0) account for between 5% and 80% of the mixture, lauric acid accounts for less than 20% of the mixture, monounsaturated fatty acids having 12-18 carbons account for 5% to 95% by weight of the mixture, polyunsaturated fatty acids and saturated fatty acids having more than 12 carbons together account for less than 20% of the mixture, and linoleic acid (18:2) and linolenic acid (18:3) together account for less than 3% by weight of the mixture. The fatty acids are alkyl-esterified, and the alkyl-esterified fatty acids are n-butylesters.

In certain preferred embodiments of the aforementioned mixture of fatty acids caprylic acid (C8:0), capric acid (C10:0), and lauric acid (C12:0) together account for 20% to 40% of the mixture; preferably lauric acid (C12:0) comprises 6% to 20% of the mixture, more preferably lauric acid (C12:0) comprises 6 to 10% of the mixture; and oleic acid (C18:1) and palmitoleic acid (16:1) together account for 50% to 85% of the mixture. In other preferred embodiments of the aforementioned mixture, caprylic acid (C8:0), capric acid (C10:0), and lauric acid (C12:0) together account for 60% to 85% of the mixture; preferably lauric acid (C12:0) comprises 6% to 20% of the mixture, more preferably lauric acid (C12:0) comprises 6 to 10% of the mixture; and oleic acid (C18:1) and palmitoleic acid (16:1) together account for 20% to 40% of the mixture.

According to the present invention, the blends of fatty acids are converted to fatty acid alkyl esters, wherein the alkyl esters are n-butyl esters.

The fatty acids may be derived from oils or blends of oils, the oils may be vegetable oils or animal fats. In preferred embodiments the oil is selected from the group consisting of canola, rapeseed, palm oil, palm kernel, coconut, tucum, sunflower, safflower, *Cuphea,* olive, macadamia, babassu, castor, peanut, cotton, flaxseed, linseed, cohune, and jatropha. The oils may be derived from a genetically modified plant. The oil may be derived from a genetically modified plant wherein the plant has been modified to produce and increased amount of medium chain fatty acids as compared to the native plant. Further, one or more oils from a native plant or plants may be blended with one or more oils obtained from genetically modified plants.

In some embodiments of the blends of fatty acids of the invention, the fatty acid blend is useful as a fuel for powering an internal combustion engine. In other embodiments the fatty acid blend is used as a feedstock in the preparation of a fuel additive, a functional fluid, freezing point depressant, a biodiesel, an aviation fuel, a home heating oil, or a substitute for kerosene.

The oils, the blends of fatty acids provided herein are alkyl-esterified to form n-butyl esters.

In further embodiments of the above aspects of the invention, the blends of fatty acid alkyl esters have a melting point of less than or equal to 0°C, preferably less than or equal to -10°C, preferably less than or equal to -15°C, preferably less than or equal to -20°C, or preferably less than or equal to -25°C.

In further embodiments of the above aspects of the invention, the blends of fatty acid alkyl esters have a cloud point of less than or equal to 0°C, preferably less than or equal to -10°C, preferably less than or equal to -15°C, preferably less than or equal to -20°C, or preferably less than or equal to -25°C.

In further embodiments of the above aspects of the invention, the blends of fatty acid alkyl esters have a pour point of less than or equal to 0°C, preferably less than or equal to -10°C, preferably less than or equal to -15°C, preferably less than or equal to -20°C, or preferably less than or equal to -25°C.

In some embodiments of the above aspects of the invention the blends of fatty acid alkyl esters are suitable for use as a fuel in an internal combustion engine, as a fuel additive, a functional fluid, a freezing point depressant, a home heating oil, an aviation or jet fuel, or a substitute for kerosene.

The phrase "suitable for use in an internal combustion engine" refers to the properties of a fuel that enable it to be used to power an internal combustion engine. In some embodiments, a suitable fuel has a cetane number of 40-100; 40-80; or preferably 40-70; or preferably 40-60; or preferably 40-55; or preferably 40-50. In other embodiments a suitable fuel has an iodine number of 20-130; preferably 40-100; preferably 20-50, or preferably 10-20. In further embodiments, a suitable fuel has a melting point of less than or equal to 0°C, preferably less than or equal to -10°C, preferably less than or equal to -15°C, preferably less than or equal to -20°C, or preferably less than or equal to -25°C. In still further embodiments, a suitable fuel has a cloud point of less than or equal to 0°C, preferably less than or equal to - 10°C, preferably less than or equal to -15°C, preferably less than or equal to -20°C, or preferably less than or equal to -25°C. In yet other embodiments, a suitable fuel has a pour point of less than or equal to 0°C, preferably less than or equal to -10°C, preferably less than or equal to -15°C, preferably less than or equal to -20°C, or preferably less than or equal to - 25°C.

In other embodiments of the above aspect of the invention the blends of fatty acid alkyl esters are used as a biodiesel and are blended with petroleum-based diesel to form a biodiesel blend for use as a fuel. In particular embodiments, the biodiesel comprises 1%, 2%, 5%, 10%, 15%, 20%, 25%, 30%, 40%, 50%, or even 75% of the biodiesel blend, with petroleum-based diesel making up the remainder. The American Society for Testing Materials (ASTM) classifies two grades of diesel fuel, #1 diesel fuel and No. 2 diesel fuel. In particular embodiments, the biodiesel is blended with #1 diesel fuel, #2 diesel fuel, or is blended with a mixture of #1 and #2 diesel.

Further disclosed is a method for predicting a theoretical melting point of a blend of fatty acid methyl esters. This method computes the sum of the product of: the percent (w/w) of an individual fatty acid methyl ester (X), the melting point for that ester ($MP_x$), and a factor ($F_x$), for each fatty acid ME contained in the blend. Thus, there is a term for each methyl ester corresponding to, for example, ($X*MP_x*F_x$). The numerical definitions of the melting points and factors used in the method can be varied and still produce a valid intermediate value. The term "factor" as used herein refers to a constant value corresponding to a fatty acid methyl ester. The factor is multiplied with the percent content for that fatty acid ME and the melting point for that fatty acid ME to produce a term for that fatty acid ME that is used in the method. For example, individual melting points can vary by plus or minus 2 °C, or 5°C, or even 10°C and the individual factors may vary by 5% or 10% or even 20% and still produce a valid predicted melting temperature for the blend.

Also disclosed is a method for predicting the melting point of a blend wherein the predicted melting point, $P_{Tm}$, is computed as follows:

$$\begin{aligned} P_{Tm} = \ & [(A*MP_A*F_A) + (B*MP_B*F_B) + (C*MP_C*F_C) + (D*MP_D*F_D) + (E*MP_E*F_E) \\ & + (F*MP_F*F_F) + (G*MP_G*F_G) + (H*MP_H*F_H) + (I*MP_I*F_I) + (J*MP_J*F_J) + \\ & (K*MP_K*F_K) + (L*MP_L*F_L) + (M*MP_M*F_M)]*(0.01), \end{aligned}$$

wherein,

A is the percent (w/w) caproic ME (6:0) in the blend;
B is the percent (w/w) caprylic ME (8:0) in the blend;
C is the percent (w/w) capric ME (10:0) in the blend;
D is the percent (w/w) lauric ME (12:0) in the blend;
E is the percent (w/w) myristic ME (14:0) in the blend;
F is the percent (w/w) palmitic ME (16:0) in the blend;
G is the percent (w/w) stearic ME (18:0) in the blend;
H is the percent (w/w) oleic ME (18:1) in the blend;
I is the percent (w/w) linoleic ME (18:2) in the blend;
J is the percent (w/w) linolenic ME (18:3) in the blend;
K is the percent (w/w) arachidic ME (20:0) in the blend;
L is the percent (w/w) behenic ME (22:0) in the blend;
M is the percent (w/w) lignoceric ME (24:0) in the blend;
$MP_A$ is -81°C to -61°C inclusive;
$MP_B$ is -50°C to -30°C inclusive;
$MP_C$ is -28°C to -8°C inclusive;
$MP_D$ is -5°C to 15°C inclusive;
$MP_E$ is 9°C to 29°C inclusive;
$MP_F$ is 21°C to 41 °C inclusive;
$MP_G$ is 28°C to 48°C inclusive;
$MP_H$ is -30°C to -10°C inclusive;
$MP_I$ is -45°C to -25°C inclusive;
$MP_J$ is -67°C to -47°C inclusive;
$MP_K$ is 45°C to 65°C inclusive;

$MP_L$ is 43°C to 63°C inclusive;
$MP_M$ is 48°C to 68°C inclusive;
$F_A$ is 8 to 12 inclusive;
$F_B$ is 3.5 to 5.5 inclusive;
$F_C$ is 1.0 to 1.4 inclusive;
$F_D$ is 0.8 to 1.2 inclusive;
$F_E$ is 0.5 to 0.7 inclusive;
$F_F$ is 1.1 to 1.6 inclusive;
$F_G$ is 1.8 to 2.6 inclusive;
$F_H$ is 0.9 to 1.3 inclusive;
$F_I$ is 0.5 to 0.8 inclusive;
$F_J$ is 0.15 to 0.25 inclusive;
$F_K$ is 8 to 12 inclusive;
$F_L$ is 1.6 to 2.4 inclusive; and
$F_M$ is 1.6 to 2.4 inclusive.

The predicted melting point may be computed as follows:

$$P_{Tm} = [A(-71.0)(10.0) + B(-40.0)(4.5) + C(-18.0)(1.2) + D(5.2)(1.0) + E(19.0)(0.60)$$
$$+ F(30.7)(1.35) + G(37.8)(2.15) + H(-19.9)(1.10) + I(-35.0)(0.65) + J(-57)(0.2) + K(54.5)(10.0) + L(53.0)(2.0) + M(57.4)(2.0)]*(0.01),$$

and A through M are defined as above.

The algorithm may be used to identify blends of fatty acid methyl esters that are suitable for use as a biodiesel wherein the predicted melting point of the blend is computed and compared to a cut-off value. The "cut-off value" as used herein refers to a desired melting point, wherein blends having a $P_{Tm}$ less than or equal to that desired melting point are suitable for use as a biodiesel. The cut-off value may be 0°C, preferably -5°C, preferably -10°C, preferably -15°C, preferably -20°C, preferably 0°C, or preferably -20°C.

The term "percent by weight" as used herein refers to the amount of a component in a blend or mixture. In general this refers to grams of a component per 100 grams of a mixture. For example a mixture having "10% compound X by weight" refers to 10 grams of compound X in 100 grams of the mixture.

The term "biodiesel" as used herein, refers to a fuel derived from vegetable oil or animal fat. In general, a biodiesel is composed of primarily fatty acid alkyl esters. Preferably, a biodiesel is suitable for use in an internal combustion engine.

The term "biodiesel blend" refers to a fuel that is a blend of a biodiesel and another fuel. In general, biodiesels are blended with a petroleum-based fuel (i.e., petrodiesel). Biodiesel blends are referred to as BXX. The "XX" indicates the amount of biodiesel in the blend. B100 is 100% biodiesel or "neat" biodiesel. A B20 blend, for example, is a 20% volumetric blend of biodiesel with 80% petrodiesel.

The term "fuel" refers to a substance that is burned to give heat or power. Examples include liquids such as gasoline, home heating oil, aviation fuel, kerosene, diesel, biodiesel, vegetable oil, and biodiesel blends. Some fuels, for example, gasoline, diesel, biodiesel, vegetable oil, or biodiesel blends can be used to power an internal combustion engine.

The phrase "genetically modified plant" refers to a transgenic plant or a genetically altered plant.

The term "native plant" as used herein refers to a plant that is not genetically modified (i.e., transgenic or genetically altered). Native plants include wild type plants as well as plants that have been selectively bred to attain particular characteristics.

The phrase "transgenic plant" refers to a plant having a gene from another plant species or non-plant species. Such a gene may be referred to as a "transgene."

The phrase "genetically altered plant" refers to a plant having one or more genetic modifications, such as transgenes and/or modified enzymes which contain one or more designed mutation(s). Such designed mutations may result in a modified enzyme having an activity that is different from the native enzyme. Such differences can include differences in substrate specificity or level of activity. As used herein, a "transgenic plant" is one type of a "genetically altered plant".

The phrase "fuel additive" refers to a liquid substance that is added to a fuel, comprising less than 5% weight of the final fuel.

The phrase "mixture of fatty acids" or "blend of fatty acids" or "fatty acid blend" may be used interchangeably and refer to a composition that includes various fatty acids. The fatty acids in a mixture of fatty acids are modified to form fatty acid alkyl esters. Accordingly, unless otherwise indicated the phrase "mixture of fatty acids" as used herein encompasses mixtures of fatty acid alkyl esters of the fatty acids specified in the mixture. Likewise, unless otherwise indicated, the term "fatty acid" as used herein includes alkyl esters of the fatty acid.

The phrase "functional fluid" refers to a liquid substance added to a fuel, comprising more than 5% weight of the final fuel.

The phrase "freezing point depressant" refers to a liquid substance added to a fuel to lower the freezing point of that fuel.

The "cetane number" or CN is a measure of fuel ignition characteristics and correlates to the ignition delay period. For example, a fuel with a high cetane number starts to burn shortly after it is injected into the cylinder (i.e., it has a short ignition delay period). Conversely, a fuel with a low cetane number has a longer ignition delay period. Further, a higher cetane number correlates with improved combustion, improved cold starting, reduced noise, reduced white smoke, and reduced emissions of HC, CO and particulate, particularly during early warm-up phase. Commercially available petroleum-derived diesel is generally found in two CN ranges: 40-46 for regular diesel, and 45-50 for premium.

The "iodine number" is determined through a standard natural oil assay to measure the degree of unsaturation in vegetable oils and fats.

The "cloud point" refers to the temperature at which the first wax crystals appear and a standardized test protocol from the American Society for Testing and Materials (ASTM) is used to determine this temperature.

The "pour point" refers to the temperature at which the fuel will no longer pour. The pour point is generally lower than the cloud point. Some engines will fail to run at the cloud point, but generally all engines will fail at the pour point.

The "melting point" of a crystalline solid refers to the temperature at which it changes state from solid to liquid. When considered as the temperature of the reverse change (i.e., from liquid to solid), it is referred to as the "freezing point." For most substances, the melting and freezing points are equal. The melting point or freezing point is lower than the pour point.

"Feedstock" as used herein refers to a substance composed of fats, fatty acids, or triglycerides that may be used as a starting material for the preparation of a biodiesel. Examples of feedstocks which may be used in the production of biodiesels include vegetable oil, waste vegetable oil, and animal fats. Other feedstocks include mixtures of fatty acids or fatty acid alkyl esters.

The term "about" as used herein means in quantitative terms plus or minus 10%. For example, "about 3%" would encompass 2.7-3.3% and "about 10%" would encompass 9-11%.

Unless otherwise indicated, any percentages stated herein are percent by weight.

Other features and advantages of the invention will be apparent from the following description of the preferred embodiments and from the claims.

BRIEF DESCRIPTION OF THE FIGURES

Figure 5 shows two pathways by which a biodiesel can be produced from an oil or fat.

Figure 6 shows the fatty acid content of some exemplary oils.

Figure 7 shows the effects of alkylesterification of fatty acids on cloud points.

**DETAILED DESCRIPTION OF THE INVENTION**

***Blending Oils***

Oils containing various compositions of medium chain fatty acids may be blended in order to achieve a desired blend of medium chain fatty acids. Oils are blended on a by weight basis. For example, the volume of rapeseed oil to be used in 100 grams of a blend composed of 25 % rapeseed oil is determined by dividing the grams of rapeseed oil in the final blend by the specific gravity of rapeseed oil (i.e., 25 gm/0.915gm/mL=27.3mL).

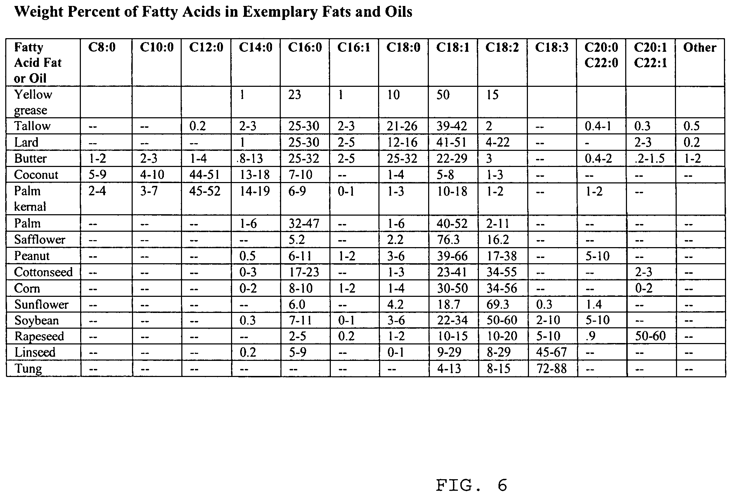

Figure 6 is a table containing some exemplary oils and the fatty acid content contained therein. These oils are commercially available from a variety of sources. It is noted that the fatty acid content values are expressed as ranges, because, as it is known in the art, the amounts of particular fatty acids present in a particular plant, can vary significantly. Thus, oils extracted from those plants may exhibit differing quantities of any or all fatty acids from batch to batch.

Therefore, it is normally necessary to determine the fatty acid content of the oils actually used to make blends or a biodiesel.

### Preparation of Fatty Acid Alkyl Esters

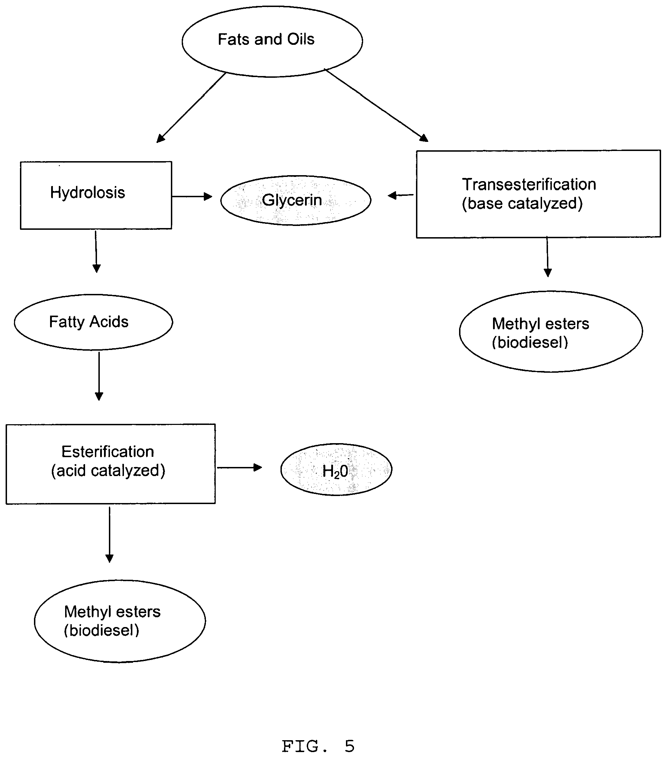

Fatty acid alkyl esters can be produced from fatty acids or from triglycerides. Generally, fatty acid alkyl esters are produced by transesterification of the triglycerides in fats and oils or esterification of free fatty acids (Figure 5). Alternatively, fatty acids may be split from triglycerides through hydrolysis and subsequently subjected to esterification to produce the fatty acid ester.

Fatty acid alkyl esters may be prepared by a transesterification reaction of the triglycerides found in various plant-derived oils such as soybean oil, palm oil, safflower oil, peanut oil, corn oil, cottonseed oil, linseed oil, coconut oil, castor oil, rapeseed oil, sunflower oil, and various oils derived from animal fats. These oils are reacted with an alcohol (e.g., methanol, ethanol, propanol, butanol) in the presence of a base catalyst such as a sodium alkoxide, sodium or potassium hydroxide, or titanium tetraisopropoxide. Reaction conditions such as temperature and pressure can be selected based on the specific alcohol used. The amount of catalyst is generally in the range of from about 0.1 to about 0.5% by weight based on the fatty acid. This process produces a fatty acid alkyl ester, wherein the alkyl group is derived from the alcohol. Thus, a reaction in which methanol was used as the alcohol would yield a fatty acid methyl ester. Other by-products include glycerin. The transesterification products are isolated by reduced pressure fractionation by distillation through a fractionation column.

Fatty acid alkyl esters may be prepared from free fatty acids through esterification. Free fatty acids are commercially available from a number of sources or may be derived from, for example, the aforementioned oils, can be reacted with an alcohol in the presence of an acid catalyst such as sulfuric acid, aryl sulfonic acids, or alkyl sulfonic acids. Reaction conditions such as temperature and pressure can be selected based on the specific alcohol used. The fatty acid esters can be recovered by neutralizing the sulfuric acid, and subsequent purification to remove aqueous constituents of the reaction.

### Blending Fatty Acid Esters

Fatty acid esters are commercially available or can be obtained by esterification of the fatty acid as described above. Fatty acids are blended in order to achieve a mixture having suitable properties for use as a biodiesel, fuel additive, functional fluid, aviation or jet fuel, home heating oil, or kerosene. The properties to consider in evaluating blends can include melting point, cloud point, pour point, iodine number, cetane number, viscosity, oxidative stability, and frictional wear characteristics..

Blends are made on a weight percent basis. For a blend of fatty acid methyl esters (FAMEs), the desired weight percent of each component FAME is divided by the specific gravity of that FAME. This yields the volume of the FAME per 100 grams of final blend. For example, to achieve a blend containing 14% (wt%) of capric acid methyl ester (having a specific gravity of 0.877g/mL), the volume of capric acid methyl ester to be used in making 100 grams of the final blend is determined as follows.

$$\text{Volume of capric acid methyl ester} = (14g/0.877g/mL) = 15.96 \text{ ml}$$

Thus, 15.96 ml of capric acid methyl ester would be required for each 100 gm of final blend.

Determination of the weight percent of a blend of FAMEs or the FAME mixture resulting from the conversion of the fatty acids contained in an oil blend to fatty acid esters is performed using a capillary gas chromatograph (Agilent Model 6890) (column-Supelco SPB-225, 30 M x 0.32mm, 0.25 $\mu$m film thickness) equipped with a flame ionization detector (FID). Sample peak areas are compared with peak areas of a known weight of calibrated standard FAME for each peak to determine the weight of each FAME in the sample. All weights are summed and the ratio of the individual FAME weight to the total (after conversion to percent) is the weight percent.

Meltingpoint. A low melting point of a blend of fatty acid esters is desirable to avoid freezing when such a blend is used in colder climates. Means of achieving a low melting point of a blend of fatty acid methyl esters have generally involved blending with conventional diesel fuel, inclusion of additives having branched-chain esters, and/or bulky substituents in the alkyl chain, and/or winterization of the blend. Blends of the present invention achieve a low melting point through the inclusion of medium chain fatty acid methyl esters, particularly C8 and C10 methyl esters. Thus, fatty acid esters may be blended to achieve a particular melting point and the melting point of the resulting blend can be determined.

The melting point can be determined by methods well-known in the art. In one method, the melting point of a blend of fatty acid methyl esters is determined by placing an aliquot of the blend in a closed end glass capillary tube and equilibrating the tube in a water bath or ethylene glycol bath held at a temperature that is below the expected melting point of the blend. After a period of time sufficient to allow the tube and its contents to equilibrate, the temperature of the water bath is raised slowly. The tube is observed by eye or using a light scattering instrument (spectrophotometer). The temperature at which the transition from solid to liquid is observed or at which light scattering diminishes is recorded as the melting point of the sample.

An alternative to a simple melting point, as explained above, is a "slip melting point". In this method, a small amount of sample is placed in a closed end capillary such that the sample is suspended in the center of the tube lengthwise. After equilibration in a water bath, the temperature is slowly raised and the temperature at which the suspended sample just begins to fall or "slip" in the capillary is recorded as the slip melting point.

Determination of melting point of a solid fat is also detailed in methods proscribed by the American Association of Cereal Chemists (AACC) method number 58-40 "Melting Point-Capillary Method, and method number 58-53 Slip Melting point. In addition, methods are also available from the American Oil Chemists Society (AOCS) Official Method Cc 1-25 "Melting Point Capillary Tube Method" and AOCS Official Method Cc 3-25 "Slip Melting Point AOCS Standard Open Tube Melting Point".

Alternatively, a predicted melting point can be computed using the algorithm contained herein.

<u>Cloud point and pour point</u>. Cloud point and pour point may be determined in the same experiment using a single apparatus. Briefly, the sample is cooled in a cloud and pour point apparatus and is examined periodically during cooling. The highest temperature at which haziness is observed is the cloud point. The lowest temperature at which movement of the oil is observed is the pour point. This method should conform to ASTM D97, D2500 and related specifications. Such an apparatus (K46100 Cloud Point & Pour Point Apparatus Cloud and Pour Point Chamber) is available from Koehler Instrument Company, Inc., 1595 Sycamore Avenue, Bohemia, New York 11716, USA.

<u>Cetane number</u>. The ignition quality of diesel fuel (DF) is commonly measured by the American Society for Testing and Materials (ASTM) test method ASTM D613 and reported as the cetane number (CN). Ignition quality is defined by the ignition delay time of the fuel in the engine. The shorter the ignition delay time, the higher the CN. Compounds are ranked according to the cetane scale. Cetane ($C_{16}H_{34}$ or hexadecane) has a very short ignition delay and has been assigned a CN of 100. At the other end of the scale is 2,2,4,4,6,8,8-heptamethylnonane (HMN; also $C_{16}H_{34}$), which has poor ignition qualities and has been assigned a CN of 15. In general, long-chain, unbranched, saturated hydrocarbons (alkanes) have high CNs and good ignition quality while branched hydrocarbons (and other materials such as aromatics) have low CNs and poor ignition quality. Further, the presence of double bonds or degrees of unsaturation in a fatty acid will lower cetane value.

Since both too high and too low CN can cause operational problems (in case of too high CN, combustion can occur before the fuel and air are properly mixed, resulting in incomplete combustion and smoke; in case of too low CN, engine roughness, misfiring, higher air temperatures, slower engine warm-up and also incomplete combustion occur), most engine manufacturers designate a range of required CN for their engines. In most cases, this range is around CN 40-50. For example, the ASTM specification for conventional diesel fuel (ASTM D975) requires a minimum CN of 40.

<u>Iodine number</u>. The iodine number is a commonly used measure of saturation and therefore, an indicator of oxidative stability. As mentioned earlier, unsaturated molecules are more susceptible to oxidation than saturated molecules. This test uses iodine to measure the number of double bonds in an oil or fuel. Thus, oils with high iodine numbers, such as soybean oil (IN = 130-135) are very susceptible to oxidation while animal fats with low iodine numbers, such as tallow (IN = 30-48) are much less susceptible. The primary drawback of the iodine number is that it does not recognize that some double bonds oxidize more readily than others. Methyl linoleate, with two double bonds, will oxidize approximately 50 times faster than methyl oleate, with only one double bond. Methyl linolenate, with three double bonds, will oxidize even faster, although not by the same level of increase. Thus, blends of primarily saturated, medium chain fatty acids would be expected to have low iodine numbers, and therefore exhibit good oxidative stability.

***Calculation of predicted melting point of fatty acid methyl esters.***

The predicted melting point, $P_{Tm}$, of a blend of fatty acid methyl esters may be computed using the amount of each fatty acid methyl ester, expressed as weight/100 g blend, and the following equation.

$$P_{Tm} = [A(-71.0)(10.0) + B(-40.0)(4.5) + C(-18.0)(1.2) + D(5.2)(1.0) + E(19.0)(0.60) + F(30.7)(1.35) + G(37.8)(2.15) + H(-19.9)(1.10) + I(-35.0)(0.65) + J(-57)(0.2) + K(54.5)(10.0) + L(53.0)(2.0) + M(57.4)(2.0)]*(0.01),$$

A is the percent (w/w) caproic ME (6:0) in the blend;
B is the percent (w/w) caprylic ME (8:0) in the blend;
C is the percent (w/w) capric ME (10:0) in the blend;

D is the percent (w/w) lauric ME (12:0) in the blend;
E is the percent (w/w) myristic ME (14:0) in the blend;
F is the percent (w/w) palmitic ME (16:0) in the blend;
G is the percent (w/w) stearic ME (18:0) in the blend;
H is the percent (w/w) oleic ME (18:1) in the blend;
I is the percent (w/w) linoleic ME (18:2) in the blend;
J is the percent (w/w) linolenic ME (18:3) in the blend;
K is the percent (w/w) arachidic ME (20:0) in the blend;
L is the percent (w/w) behenic ME (22:0) in the blend; and
M is the percent (w/w) lignoceric ME (24:0) in the blend.

The predicted melting point may be used to identify blends that are suitable for use as a biodiesel. The predicted melting point may be compared to a cut-off value (i.e., a desired melting point for a biodiesel). Those blends having a predicted melting point less than or equal to the cut-off value are suitable for use as a biodiesel.

The following examples serve to illustrate the present invention. These examples are in no way intended to limit the scope of the invention. Examples wherein the fatty acid alkyl esters are esters other than n-butylesters do not represent examples according to the invention. Accordingly, the n-butylesters in Example 14 represent an example according to the invention.

EXAMPLE 1

Fatty acid methyl ester Blend 1

A blend of fatty acid methyl esters ("Blend 1") having the composition of fatty acid methyl esters as set forth in the table below, is prepared by mixing together the fatty acid methyl esters using the volumes presented in the below table to make 100g of Blend 1.

| Component | Blend 1 | mL/100g |
|---|---|---|
| caproic ME (6:0) | 1% | 1.1 |
| caprylic ME (8:0) | 20 | 22.8 |
| capric ME (10:0) | 30 | 34.4 |
| lauric ME (12:0) | 20 | 23.0 |
| myristic ME (14:0) | 4 | 4.7 |
| palmitic ME (16:0) | 2 | 2.3 |
| stearic ME (18:0) | 2 | 2.1 |
| oleic ME (18:1) | 15 | 17.1 |
| linoleic ME (18:2) | 1 | 1.1 |
| linolenic ME (18:3) | 1 | 1.1 |
| arachidic ME (20:0) | 1 | 1.2 |
| behenic ME (22:0) | 1 | 1.2 |
| lignoceric ME (24:0) | 1 | 1.2 |

The predicted melting point of Blend 1, $P_{Tm}$, as computed by invention methods, is -41.6°C.

**EXAMPLE 2**

**Fatty acid methyl ester Blend 2**

A blend of fatty acid methyl esters ("Blend 2") having the composition of fatty acid methyl esters as set forth in the table below, is prepared by mixing together the fatty acid methyl esters using the volumes presented in the above table to make 100g of Blend 2.

| Component | Blend 2 | mL/100g |
|---|---|---|
| caproic ME (6:0) | 1% | 1.1 |
| caprylic ME (8:0) | 10 | 11.4 |
| capric ME (10:0) | 35 | 40.1 |
| lauric ME (12:0) | 25 | 28.7 |
| myristic ME (14:0) | 5 | 5.8 |
| palmitic ME (16:0) | 2 | 2.3 |
| stearic ME (18:0) | 2 | 2.1 |
| oleic ME (18:1) | 15 | 17.1 |
| linoleic ME (18:2) | 1 | 1.1 |
| linolenic ME (18:3) | 1 | 1.1 |
| arachidic ME (20:0) | 1 | 1.2 |
| behenic ME (22:0) | 1 | 1.2 |
| lignoceric ME (24:0) | 1 | 1.2 |

The predicted melting point of Blend 2, $P_{Tm}$, as computed by invention methods, is -24.3°C.

## EXAMPLE 3

**Fatty acid methyl ester Blend 3**

A blend of fatty acid methyl esters ("Blend 3") having the composition of fatty acid methyl esters as set forth in the table below, is prepared by mixing together the fatty acid methyl esters using the volumes presented in the above table to make 100g of Blend 3.

| Component | Blend 3 | ml/100g |
|---|---|---|
| caproic ME (6:0) | 1 | 1.1 |
| caprylic ME (8:0) | 5 | 5.7 |
| capric ME (10:0) | 35 | 40.1 |
| lauric ME (12:0) | 30 | 34.5 |
| myristic ME (14:0) | 5 | 5.8 |
| palmitic ME (16:0) | 2 | 2.3 |
| stearic ME (18:0) | 2 | 2.1 |
| oleic ME (18:1) | 15 | 17.1 |
| linoleic ME (18:2) | 1 | 1.1 |
| linolenic ME (18:3) | 1 | 1.1 |
| arachidic ME (20:0) | 1 | 1.2 |
| behenic ME (22:0) | 1 | 1.2 |
| lignoceric ME (24:0) | 1 | 1.2 |

The predicted melting point of Blend 3, $P_{Tm}$, as computed by invention methods, is -15.0°C.

### EXAMPLE 4

**Fatty acid methyl ester Blend 4**

A blend of fatty acid methyl esters ("Blend 4") having the composition of fatty acid methyl esters as set forth in the table below, is prepared by mixing together the fatty acid methyl esters using the volumes presented in the above table to make 100g of Blend 4.

| Component | Blend 4 | mL/100g |
|---|---|---|
| caproic ME (6:0) | 1% | 1.1 |
| caprylic ME (8:0) | 5 | 5.7 |
| capric ME (10:0) | 30 | 34.4 |
| lauric ME (12:0) | 30 | 34.5 |
| myristic ME (14:0) | 5 | 5.8 |
| palmitic ME (16:0) | 7 | 8.2 |
| stearic ME (18:0) | 2 | 2.1 |
| oleic ME (18:1) | 15 | 17.1 |
| linoleic ME (18:2) | 1 | 1.1 |
| linolenic ME (18:3) | 1 | 1.1 |
| arachidic ME (20:0) | 1 | 1.2 |
| behenic ME (22:0) | 1 | 1.2 |
| lignoceric ME (24:0) | 1 | 1.2 |

The predicted melting point of Blend 4, $P_{Tm}$, as computed by invention methods, is -11.9°C.

### EXAMPLE 5

**Oil Blend A**

A blend of two oils ("Blend 4") having the fatty acid composition set forth below is prepared by mixing together coconut oil and *Cuphea lanceolata* oil having the fatty acid composition set forth below.

| Component | Blend A | *Cuphea lancelolata* oil | Coconut oil |
|---|---|---|---|
| caproic acid (6:0) | 0.4% | 0 | 0.5 |
| caprylic acid (8:0) | 5.5 | 0.6 | 7.1 |
| capric acid (10:0) | 25 | 83.2 | 6 |
| lauric acid (12:0) | 36 | 2.1 | 47.1 |
| myristic acid (14:0) | 14 | 2 | 18.5 |
| palmitic acid (16:0) | 7.7 | 3.4 | 9.1 |
| stearic acid (18:0) | 2.1 | 0 | 2.8 |
| oleic acid (18:1) | 6.0 | 3.4 | 6.8 |
| linoleic acid (18:2) | 2.6 | 4.6 | 1.9 |
| linolenic acid (18:3) | 0.1 | | 0.1 |
| arachidic acid (20:0) | 0.1 | | 0.1 |
| behenic acid (22:0) | 0 | 0 | 0 |

(continued)

| Component | Blend A | *Cuphea lancelolata* oil | Coconut oil |
|---|---|---|---|
| lignoceric ME (24:0) | 0 | 0 | 0 |

Blend A can be prepared by mixing 75% by weight of the above coconut oil with 25% by weight of the above *Cuphea lanceolata* oil. 25 gms of *Cuphea lanceolata* oil (25 gm/ 0.92gm/ml = 27.2 mL) is combined with 75 gms of soybean oil (75gm/0.924gm/mL = 81.2mL) to make 100gm Blend A.

## EXAMPLE 6

### Conversion of Oils to FAMES

Various types of commercial vegetable oil (including soy, canola, corn, macadamia, olive, safflower, sunflower, peanut, walnut, palm, coconut, and castor oil) were obtained from retail sources. 200 gm of each oil was weighed into a glass screw cap bottle and combined with 2 volumes (w/v) of sodium methoxide reagent (5% w/v sodium methoxide/methanol). After mixing for 2 hours at room temperature, 50 ml hexane was added, mixed vigorously and the phases were allowed to separate. The lower glycerol-containing layer was removed and discarded. The upper layer was treated under vacuum in a rotary evaporator to remove hexane and any remaining volatiles. The final solution of FAME was stored under nitrogen gas at room temperature in a tightly capped glass bottle.

## EXAMPLE 7

### Conversion of Fatty Acids to FAMES

100 grams of various fatty acids, or mixtures of fatty acids, were weighed into a glass bottle and combined with 200 ml of anhydrous methanol/1% sulfuric acid. Each mixture was covered with nitrogen gas and the container tightly capped. The reaction bottle was placed in an incubator oven for 4 hr. at 50°C. During the incubation, the mixture was shaken occasionally to mix the reactants. The mixture was transferred to a glass separatory funnel, and combined with 100 ml of 5% (w/v) sodium chloride aqueous solution. The mixture was shaken vigorously and the phases allowed to separate by standing. The lower aqueous layer was removed and discarded. The upper layer was transferred to a clean, dry bottle and combined with 5 gm of anhydrous sodium sulfate. This mixture was vigorously shaken until all visible water droplets were removed. The mixture was then filtered thru Whatman 1 filter paper. The sodium sulfate and filter apparatus was rinsed in hexane to recover additional FAME and the wash added to the non-aqueous fraction. The combined filtrate and washes were placed into a rotary evaporator under vacuum to remove hexane and remaining volatiles. The final solution of FAME was transferred to a brown glass bottle, covered with nitrogen gas, tightly capped with a Teflon lined cap, and stored at 4°C. Other esters were synthesized using this protocol substituting ethanol, n-propanol, iso-propanol, n-butanol, sec-butanol, or t-butanol in place of the methanol used above.

## EXAMPLE 8

### Cold Temperature Testing of Alkyl Ester Mixtures

Cold temperature properties of alkyl esters and ester mixtures were tested by pipetting aliquots of pure alkyl esters or ester mixtures obtained from oils or fatty acids as described above, into 10 mm x 100 mm glass test tubes, to a final volume of 1.0 ml. The tubes were capped with polypropylene snap caps and placed in plastic racks. The racked tubes were then immersed to a depth of 1-2 cm above the top of the sample, in a chilled solution of 50% ethylene glycol/water. A series of water baths were used to sequentially test samples at 0, -10, -15, -20, and -25°C. Samples were held at the test temperature for 1 hr and each tube was withdrawn and examined for the presence of cloudiness, solidification, and pour/flow characteristics. In addition, select samples were sent to an independent testing laboratory (Intertek-Caleb-Brett Laboratories) and evaluated for pour point, cloud point, and cold filter plugging using the appropriate ASTM standard methods for diesel fuel (ASTM D-97-06, ASTM D-2500-05, and ASTM D6371). Cloud points of esters and ester mixtures were also determined using a portable diesel fuel cloud point analyzer, model CPA-T30 (Phase Technology Corp.). A 10 ml plastic syringe was filled with ester or ester mixture and injected into the instrument. After 10 minutes the instrument provided a precise cloud point temperature readout.

**EXAMPLE 9**

**Melting Points of B100 Seed Oils and #2 Diesel**

A series of B100 biodiesel fluids (fatty acid alkyl esters) were made from vegetable oils including soy, canola, corn, macadamia, olive, safflower, sunflower, peanut, walnut, palm, coconut, and castor oils in accordance with the procedures described in Example 6. These fuels were compared with a commercially obtained petroleum-based diesel #2 (Shell Oil Co., San Diego, CA) for cold flow properties in accordance with the procedures described in Example 8. The effects of incubating each fluid at various temperatures between +20 and -20°C are shown in the table below, which shows whether the fluid was liquid or solid after incubating at a given temperature for 1 hr (pour point). Diesel fuel remained liquid to -15°C but was solid after 1 hr. at -20°C. In contrast, the vegetable oil based fatty acid methyl esters solidified at much lower temperatures. Palm oil methyl ester was solid at +5°C. The best performing vegetable oil based esters were canola and castor which were both solid at -15°C. Thus, none of the vegetable oil methyl esters had cold temperature properties that equal diesel fuel or the target of a cloud point of less than -20°C.

| Base Oil | % | RT | 0°C | -10°C | -15°C | -20°C |
|---|---|---|---|---|---|---|
| SOY | 100 | L | L | S | S | S |
| CANOLA | 100 | L | L | L | CL | S |
| CORN | 100 | L | L | S | S | S |
| MACADAMIA | 100 | L | S | S | S | S |
| OLIVE | 100 | L | L | S | S | S |
| SAFFLOWER | 100 | L | L | S | S | S |
| SUNFLOWER | 100 | L | CL | S | S | S |
| PEANUT | 100 | L | S | S | S | S |
| WALNUT | 100 | L | L | S | S | S |
| PALM | 100 | L | S | S | S | S |
| COCONUT | 100 | L | L | S | S | S |
| CASTOR | 100 | L | L | L | S | S |
| DIESEL #2 | 100 | L | L | L | L | L |
| Key: L = liquid<br>S = solid<br>CL = cloudy liquid<br>RT = Room Temperature | | | | | | |

**EXAMPLE 10**

**C8 and C10 FAMES Lower the Melting Point of Soy and Canola B100**

The cold temperature properties of vegetable oil derived methyl esters were improved by the addition of short chain fatty acid methyl esters. Soy oil methyl ester was solid at -10°C. When 30% (v/v) C8 methyl ester (methyl octanoate) was added to soy oil methyl ester, the mixture remained liquid at -10°C. When the C8 methyl ester was increased to 60% (v/v) the mixture remained liquid to -20°C. Addition of C10 methyl ester (methyl decanoate) had an identical effect on the pour point of soy derived methyl ester. Cold temperature performance of canola oil derived methyl ester was also improved by the addition of short chain methyl esters. Addition of 40% C8 methyl ester to canola methyl ester lowered the observed pour point to -20°C. Addition of C10 methyl ester to canola had a similar effect on observed pour points. Addition of a mixture of C8/C10 esters to canola or soy methyl esters also depressed the pour point of the mixture.

| Base Oil | % | C8ME | C10ME | RT | 0°C | -10°C | -15°C | -20°C |
|---|---|---|---|---|---|---|---|---|
| Soy | 100 | | 0 | L | L | S | S | S |

(continued)

| Base Oil | % | C8ME | C10ME | RT | 0°C | -10°C | -15°C | -20°C |
|----------|-----|------|-------|-----|-----|-------|-------|-------|
| Soy | 90 | | 10 | L | L | S | S | S |
| Soy | 80 | | 20 | L | L | S | S | S |
| Soy | 70 | | 30 | L | L | S | S | S |
| Soy | 60 | | 40 | L | L | L | S | S |
| Soy | 50 | | 50 | L | L | L | S | S |
| Soy | 100 | 0 | | L | L | S | S | S |
| Soy | 90 | 10 | | L | L | S | S | S |
| Soy | 80 | 20 | | L | L | S | S | S |
| Soy | 70 | 30 | | L | L | L | S | S |
| Soy | 60 | 40 | | L | L | L | S | S |
| Soy | 50 | 50 | | L | L | L | S | S |
| Soy | 40 | 60 | | L | L | L | L | L |
| Soy | 30 | 70 | | L | L | L | L | L |
| Soy | 20 | 80 | | L | L | L | L | L |
| Soy | 10 | 90 | | L | L | L | L | L |
| Canola | 100 | 0 | | L | L | CL | S | S |
| Canola | 90 | 10 | | L | L | CL | S | S |
| Canola | 80 | 20 | | L | L | CL | CL | S |
| Canola | 70 | 30 | | L | L | L | CL | S |
| Canola | 60 | 40 | | L | L | L | CL | CL |
| Canola | 50 | 50 | | L | L | L | CL | CL |
| Canola | 40 | 60 | | L | L | L | L | CL |
| Canola | 30 | 70 | | L | L | L | L | L |
| Canola | 20 | 80 | | L | L | L | L | L |
| Canola | 10 | 90 | | L | L | L | L | L |
| Canola | 0 | 100 | | L | L | L | L | L |
| Canola | 100 | | 0 | L | L | CL | S | S |
| Canola | 90 | | 10 | L | L | CL | S | S |
| Canola | 80 | | 20 | L | L | CL | CL/S | S |
| Canola | 70 | | 30 | L | L | L | CL | CL |
| Canola | 60 | | 40 | L | L | L | CL | CL |
| Canola | 50 | | 50 | L | L | L | CL | CL |

Key: L = liquid
S = solid
CL = cloudy liquid
RT = Room Temperature
C8ME = methyl octanoate
C10ME = methyl decanoate

## EXAMPLE 11

**Melting Properties of Various Whole Oil B2-B100 Biodiesel Blends**

Mixtures of diesel fuel with vegetable oil-derived methyl esters were also tested for cold temperature properties. Diesel fuel was tested with 2% (B2), 5% (B5), 20% (B20) (v/v) vegetable oil derived methyl ester, along with pure vegetable oil derived methyl ester (B100). Addition of vegetable oil-derived methyl ester to diesel fuel had no observable effect on pour points of the mixtures except with the B20 blends. Canola, castor and soy had no effect on the B20 pour point, while corn, olive, safflower, sunflower, peanut, palm, and coconut all raised the observed pour points of the B20 blends compared to pure diesel fuel.

| Base Oil | RT | 0°C | -10°C | -15°C | -20°C |
|---|---|---|---|---|---|
| Soy B2 | L | L | L | L | S |
| B5 | L | L | L | L | S |
| B20 | L | L | L | S | S |
| B100 | L | L | S | S | S |
| CANOLA B2 | L | L | L | L | S |
| B5 | L | L | L | L | S |
| B20 | L | L | L | L | S |
| B100 | L | L | S | S | S |
| CORN B2 | L | L | L | L | S |
| B5 | L | L | L | L | S |
| B20 | L | L | L | S | S |
| B100 | L | L | S | S | S |
| OLIVE B2 | L | L | L | L | S |
| B5 | L | L | L | L | S |
| B20 | L | L | L | S | S |
| B100 | L | L | S | S | S |
| SAFFLOWER B2 | L | L | L | L | S |
| B5 | L | L | L | L | S |
| B20 | L | L | L | L | S |
| B100 | L | L | S | S | S |
| SUNFLOWER B2 | L | L | L | L | S |
| B5 | L | L | L | L | S |
| B20 | L | L | L | S | S |
| B100 | L | L | S | S | S |
| PEANUT B2 | L | L | L | L | S |
| B5 | L | L | L | L | S |
| B20 | L | L | L | S | S |
| B100 | L | S | S | S | S |
| PALM B2 | L | L | L | L | S |
| B5 | L | L | L | L | S |
| B20 | L | L | L | S | S |

(continued)

| Base Oil | RT | 0°C | -10°C | -15°C | -20°C |
|---|---|---|---|---|---|
| B100 | L | S | S | S | S |
| COCONUT B2 | L | L | L | L | S |
| B5 | L | L | L | L | S |
| B20 | L | L | L | L | S |
| B100 | L | L | S | S | S |
| CASTER B2 | L | L | L | L | S |
| B5 | L | L | L | L | S |
| B20 | L | L | L | L | S |
| B100 | L | L | L | S | S |

Key: B2 = 2% methyl ester + 98% Diesel #2
B5 = 5% methyl ester + 95% Diesel #2
B20 = 20% methyl ester + 80% Diesel #2
B100 = 100% methyl ester
L = liquid
S = solid

## EXAMPLE 12

### Effects of Long Chain Saturates on Melting Point

Fatty acid methyl esters were tested for cold temperature performance as detailed above. The chart below shows the effect of adding long chain saturated fatty acids to C18:1 methyl ester (methyl octadecenoate). Pure C18:1 methyl ester is liquid at -20°C but addition of C18:0 methyl octadecanoate) raises the observed pour point to as high as +5°C with as little as 2% C18:0 present in the mixture; at 1% C18:0 the pour point of the mixture is 0°C. Similarly, C16 mixtures with C18:1 dramatically raises the pour point. A mixture of 9% (v/v) C16 methyl ester (methyl hexadecanoate) with 91% C18:1 was solid at -5°C. As little as 3% C16:0 resulted in a solid at -15°C. C14:0 methyl ester (methyl tetradecanoate) at concentrations as low as 1% resulted in a solid at -20°C, and 30% C14:0 was solid at -10°C. Mixtures with C12:0 (methyl dodecanoate) presented an interesting and unexpected result. At levels of C12 between 1% and 5% the mixtures were solid at -20°C, but between 6% and 20% C12 mixtures with C18:1 remained liquid at -20°C. Accordingly, the presence of C12:0 in a biodiesel at 6-20%; or more preferably at 6-10%, has surprising beneficial effects on cold flow properties. Thus, while the longer chain saturated FAMEs significantly raised the pour point of mixtures with C18:1, C14 had a much smaller effect and C12 had almost no effect at concentrations up to 20% (v/v).

| C12ME | C14ME | C16ME | C18ME | C18:1ME | RT | 0°C | -10°C | -15°C | -20°C |
|---|---|---|---|---|---|---|---|---|---|
| 1 | | | | 99 | L | L | L | L | S |
| 2 | | | | 98 | L | L | L | L | S |
| 3 | | | | 97 | L | L | L | L | S |
| 4 | | | | 96 | L | L | L | L | S |
| 5 | | | | 95 | L | L | L | L | S |
| 6 | | | | 94 | L | L | L | L | CL |
| 7 | | | | 93 | L | L | L | L | CL |
| 8 | | | | 92 | L | L | L | L | CL |
| 9 | | | | 91 | L | L | L | L | CL |
| 10 | | | | 90 | L | L | L | L | CL |
| | 1 | | | 99 | L | L | L | L | S |

(continued)

| C12ME | C14ME | C16ME | C18ME | C18:1ME | RT | 0°C | -10°C | -15°C | -20°C |
|---|---|---|---|---|---|---|---|---|---|
|  | 2 |  |  | 98 | L | L | L | L | S |
|  | 3 |  |  | 97 | L | L | L | L | S |
|  | 4 |  |  | 96 | L | L | L | L | S |
|  | 5 |  |  | 95 | L | L | L | L | S |
|  | 6 |  |  | 94 | L | L | L | L | S |
|  | 7 |  |  | 93 | L | L | L | L | S |
|  | 8 |  |  | 92 | L | L | L | L | S |
|  | 9 |  |  | 91 | L | L | L | L | S |
|  | 10 |  |  | 90 | L | L | L | L | S |
|  |  | 1 |  | 99 | L | L | L | L | S |
|  |  | 2 |  | 98 | L | L | L | L | S |
|  |  | 3 |  | 97 | L | L | L | S | S |
|  |  | 4 |  | 96 | L | L | L | S | S |
|  |  | 5 |  | 95 | L | L | L | S | S |
|  |  | 6 |  | 94 | L | L | L | S | S |
|  |  | 7 |  | 93 | L | L | L | S | S |
|  |  | 8 |  | 92 | L | L | CL | S | S |
|  |  | 9 |  | 91 | L | L | S | S | S |
|  |  | 10 |  | 90 | L | L | S | S | S |
|  |  |  | 1 | 99 | L | L | CL | S | S |
|  |  |  | 2 | 98 | L | CL | S | S | S |
|  |  |  | 3 | 97 | L | CL | S | S | S |
|  |  |  | 4 | 96 | L | CL | S | S | S |
|  |  |  | 5 | 95 | L | S | S | S | S |
|  |  |  | 6 | 94 | L | S | S | S | S |
|  |  |  | 7 | 93 | L | S | S | S | S |
|  |  |  | 8 | 92 | L | S | S | S | S |
|  |  |  | 9 | 91 | L | S | S | S | S |
|  |  |  | 10 | 90 | L | S | S | S | S |

Key: L = liquid
S = solid
CL = cloudy liquid
RT = Room Temperature
C12ME = methyl dodecanoate
C14ME = methyl tetradecanoate
C16ME = methyl hexadecanoate
C18ME = methyl octadecanoate
C18:1ME = methyl octadecenoate

**EXAMPLE 14**

**Effect of Alkyl-Esterification on Cloud Point.**

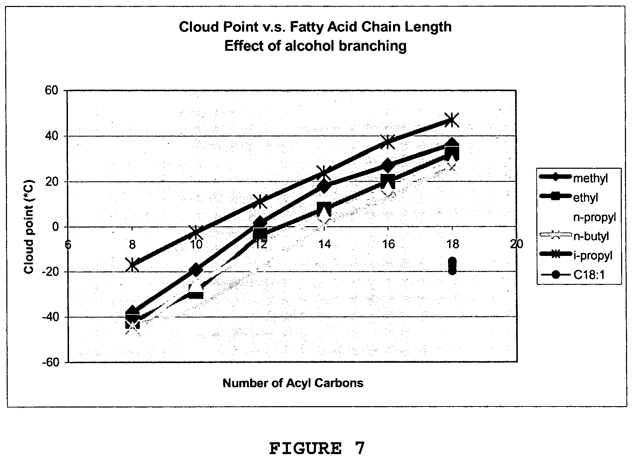

Various fatty acids (C8, C10, C12, C14 and C18) were converted to alkylesters (methylester, ethylester, n-propylester, n-butylester, or isopropylester) using the general protocol described in Example 7 and the cloud points for the fatty acid alkylesters were evaluated. The results of these experiments are shown on figure 7. As expected, for each type of akylester, the longer chain fatty acids had a higher cloud point than shorter chain fatty acids (ie., C8 < C10 < C12 < C14 < C18). longer chain fatty acids. Surprisingly, for each type of fatty acid, the isopropylester fatty acids had the highest cloud point compared to the other types of alkylesterified fatty acids. Other than isopropylesterified fatty acids, the larger length esters generally had lower cloud points than shorter length alkyl esters (i.e., methylester > ethylester > n-propylester > n-butylester). Thus, based on these experiments, n-butyl esters have the most favorable cold flow properties for biodiesels and isopropylesters have the least favorable cold flow properties for biodiesels. Moreover, straight chain alkylesters have more favorable cold flow properties compared to corresponding branched chain alkylesters.

Unless otherwise defined, all technical and scientific terms used herein have the same meaning as commonly understood by one of ordinary skill in the art to which this invention belongs.

The inventions illustratively described herein may suitably be practiced in the absence of any element or elements, limitation or limitations, not specifically disclosed herein. Thus, for example, the terms "comprising," "including," "containing," etc. shall be read expansively and without limitation. Additionally, the terms and expressions employed herein have been used as terms of description and not of limitation, and there is no intention in the use of such terms and expressions of excluding any equivalents of the features shown and described or portions thereof, but it is recognized that various modifications are possible within the scope of the invention claimed.

The invention has been described broadly and generically herein. Each of the narrower species and subgeneric groupings falling within the generic disclosure also form part of the invention. This includes the generic description of the invention with a proviso or negative limitation removing any subject matter from the genus, regardless of whether or not the excised material is specifically recited herein.

In addition, where features or aspects of the invention are described in terms of Markush groups, those skilled in the art will recognize that the invention is also thereby described in terms of any individual member or subgroup of members of the Markush group.

**Claims**

1. A mixture of fatty acids comprising:

    80% to 100% by weight saturated fatty acids having 8-12 carbons and monounsaturated fatty acids having 12-18 carbons;
    5% to 80% by weight caprylic acid (C8:0) and capric acid (C10:0), and
    less than 20% by weight lauric acid (C12:0);
    wherein said monounsaturated fatty acids account for 5% to 95% by weight of the mixture; and
    wherein said mixture comprises less than 20% by weight polyunsaturated fatty acids and saturated fatty acids having more than 12 carbons;
    wherein linoleic acid (C18:2) and linolenic acid (C18:3) together account for less than 3% by weight of the mixture;
    wherein said fatty acids are alkyl-esterified; and
    wherein the alkyl-esterified fatty acids are n-butylesters.

2. The mixture of claim 1, wherein oleic acid (C18:1) and palmitoleic acid (C16:1) together account for 50% to 85% by weight of the mixture.

3. The mixture of any of the preceding claims, wherein stearic (C18:0) and palmitic acid (C16:0) account for less than 4% by weight of the mixture.

4. The mixture of any of the preceding claims, wherein myristic acid (C14:0) accounts for less than 2% by weight of the mixture.

5. The mixture of any of the preceding claims, wherein arachidic acid (C20:0), behenic acid (C22:0) and lignoceric acid (C24:0) account for less than 1% by weight of the mixture.

**6.** The mixture of claim 1, wherein said mixture comprises:

   55% to 65% by weight oleic acid (C18:1);
   5% to 15% by weight lauric acid (C12:0);
   15% to 25% by weight capric acid (C10:0); and
   5% to 15% by weight caprylic acid (C8:0).

**7.** The mixture of claim 1, wherein caprylic acid (C8:0), capric acid (C10:0), and lauric acid (C12:0) together account for 60% to 85% by weight of the mixture.

**8.** The mixture of claim 1, wherein oleic acid (C18:1) and palmitoleic acid (C16:1) together account for 15% to 40% by weight of the mixture.

**9.** Use of the mixture of any of the preceding claims as a fuel in an internal combustion engine.

**10.** Use of the mixture of any of the preceding claims as a fuel additive, functional fluid, or freezing point depressant.

**11.** A biodiesel blend comprising the mixture of any of claims 1 to 8 and a petroleum diesel, wherein said mixture comprises a volumetric portion of the blend selected from the group consisting of 1%, 2%, 5%, 10%, 15%, 20%, 25%, 30%, 40%, 50% and 75%.

**Patentansprüche**

**1.** Gemisch von Fettsäuren, umfassend:

   80 Gew.-% bis 100 Gew.-% gesättigte Fettsäuren mit 8-12 Kohlenstoffen und einfach ungesättigte Fettsäuren mit 12-18 Kohlenstoffen;
   5 Gew.-% bis 80 Gew.-% Caprylsäure (C8:0) und Caprinsäure (C10:0), und
   weniger als 20 Gew.-% Laurinsäure (C12:0);
   wobei die einfach ungesättigten Fettsäuren 5 Gew.-% bis 95 Gew.-% des Gemisches ausmachen; und
   wobei das Gemisch weniger als 20 Gew.-% mehrfach ungesättigte Fettsäuren und gesättigte Fettsäuren mit mehr als 12 Kohlenstoffen umfasst;
   wobei Linolsäure (C18:2) und Linolensäure (C18:3) zusammen weniger als 3 Gew.-% des Gemisches ausmachen;
   wobei die Fettsäuren mit Alkyl verestert sind; und
   wobei die mit Alkyl veresterten Fettsäuren n-Butylester sind.

**2.** Gemisch nach Anspruch 1, wobei Oleinsäure (C18:1) und Palmitoleinsäure (C16:1) zusammen 50 Gew.-% bis 85 Gew.-% des Gemisches ausmachen.

**3.** Gemisch nach einem der vorhergehenden Ansprüche, wobei Stearinsäure (C18:0) und Palmitinsäure (C16:0) weniger als 4 Gew.-% des Gemisches ausmachen.

**4.** Gemisch nach einem der vorhergehenden Ansprüche, wobei Myristinsäure (C 14:0) weniger als 2 Gew.-% des Gemisches ausmacht.

**5.** Gemisch nach einem der vorhergehenden Ansprüche, wobei Arachinsäure (C20:0), Behensäure (C22:0) und Lignocerinsäure (C24:0) weniger als 1 Gew.-% des Gemisches ausmachen.

**6.** Gemisch nach Anspruch 1, wobei das Gemisch umfasst:

   55 Gew.-% bis 65 Gew.-% Oleinsäure (C18:1);
   5 Gew.-% bis 15 Gew.-% Laurinsäure (C12:0);
   15 Gew.-% bis 25 Gew.-% Caprinsäure (C10:0); und
   5 Gew.-% bis 15 Gew.-% Caprylsäure (C8:0).

**7.** Gemisch nach Anspruch 1, wobei Caprylsäure (C8:0), Caprinsäure (C10:0) und Laurinsäure (C12:0) zusammen 60 Gew.-% bis 85 Gew.-% des Gemisches ausmachen.

8. Gemisch nach Anspruch 1, wobei Oleinsäure (C18:1) und Palmitoleinsäure (C16:1) zusammen 15 Gew.-% bis 40 Gew.-% des Gemisches ausmachen.

9. Verwendung des Gemisches nach einem der vorhergehenden Ansprüche als Brennstoff in einem Verbrennungsmotor.

10. Verwendung des Gemisches nach einem der vorhergehenden Ansprüche als Brennstoffadditiv, Funktionsfluid oder Gefrierpunkt-Erniedriger.

11. Biodiesel-Mischung, umfassend das Gemisch nach einem der Ansprüche 1 bis 8 und einen Petroleumdiesel, wobei das Gemisch einen Anteil der Mischung, bezogen auf Volumen, ausgewählt aus der Gruppe, bestehend aus 1%, 2%, 5%, 10%, 15%, 20%, 25%, 30%, 40%, 50% und 75%, umfasst.

## Revendications

1. Mélange d'acides gras comprenant :

   80% à 100% en poids d'acides gras saturés ayant 8 à 12 carbones et d'acides gras mono-insaturés ayant 12 à 18 carbones ;
   5% à 80% en poids d'acide caprylique (C8:0) et d'acide caprique (C10:0), et moins de 20% en poids d'acide laurique (C12:0) ;
   sachant que lesdits acides gras mono-insaturés représentent 5% à 95% en poids du mélange ; et
   sachant que ledit mélange comprend moins de 20% en poids d'acides gras poly-insaturés et d'acides gras saturés ayant plus de 12 carbones ;
   sachant que de l'acide linoléique (C18:2) et de l'acide linolénique (C18:3) représentent ensemble moins de 3% en poids du mélange ;
   sachant que lesdits acides gras sont alkyle-estérifiés , et
   sachant que les acides gras alkyle-estérifiés sont des n-butylesters.

2. Le mélange de la revendication 1, sachant que de l'acide oléique (C18:1) et de l'acide palmitoléique (C16:1) représentent ensemble 50% à 85% en poids du mélange.

3. Le mélange de l'une quelconque des revendications précédentes, sachant que de l'acide stéarique (C18:0) et palmitique (C16:0) représentent moins de 4% en poids du mélange.

4. Le mélange de l'une quelconque des revendications précédentes, sachant que de l'acide myristique (C14:0) représente moins de 2% en poids du mélange.

5. Le mélange de l'une quelconque des revendications précédentes, sachant que de l'acide arachidique (C20:0), de l'acide béhénique (C22:0) et de l'acide lignocérique (C24:0) représentent moins de 1% en poids du mélange.

6. Le mélange de la revendication 1, sachant que ledit mélange comprend :

   55% à 65% en poids d'acide oléique (C18:1) ;
   5% à 15% en poids d'acide laurique (C12:0) ;
   15% à 25% en poids d'acide caprique (C10:0) ; et
   5% à 15% en poids d'acide caprylique (C8:0).

7. Le mélange de la revendication 1, sachant que de l'acide caprylique (C8:0), de l'acide caprique (C10:0), et de l'acide laurique (C12:0) représentent ensemble 60% à 85% en poids du mélange.

8. Le mélange de la revendication 1, sachant que de l'acide oléique (C18:1) et de l'acide palmitoléique (C16:1) représentent ensemble 15% à 40% en poids du mélange.

9. Utilisation du mélange de l'une quelconque des revendications précédentes comme combustible dans un moteur à combustion interne.

**10.** Utilisation du mélange de l'une quelconque des revendications précédentes comme additif de combustible, fluide fonctionnel, ou abaisseur de point de congélation.

**11.** Mélange de biodiesel comprenant le mélange de l'une quelconque des revendications 1 à 8 et un diesel de pétrole, sachant que ledit mélange comprend une portion volumétrique du mélange sélectionné dans le groupe constitué par 1%, 2%, 5%, 10%, 15%, 20%, 25%, 30%, 40%, 50% et 75%.

FIG. 5

**Weight Percent of Fatty Acids in Exemplary Fats and Oils**

| Fatty Acid Fat or Oil | C8:0 | C10:0 | C12:0 | C14:0 | C16:0 | C16:1 | C18:0 | C18:1 | C18:2 | C18:3 | C20:0 C22:0 | C20:1 C22:1 | Other |
|---|---|---|---|---|---|---|---|---|---|---|---|---|---|
| Yellow grease | | | | 1 | 23 | 1 | 10 | 50 | 15 | | | | |
| Tallow | -- | -- | 0.2 | 2-3 | 25-30 | 2-3 | 21-26 | 39-42 | 2 | -- | 0.4-1 | 0.3 | 0.5 |
| Lard | -- | -- | -- | 1 | 25-30 | 2-5 | 12-16 | 41-51 | 4-22 | -- | - | 2-3 | 0.2 |
| Butter | 1-2 | 2-3 | 1-4 | .8-13 | 25-32 | 2-5 | 25-32 | 22-29 | 3 | -- | 0.4-2 | .2-1.5 | 1-2 |
| Coconut | 5-9 | 4-10 | 44-51 | 13-18 | 7-10 | -- | 1-4 | 5-8 | 1-3 | -- | -- | -- | -- |
| Palm kernal | 2-4 | 3-7 | 45-52 | 14-19 | 6-9 | 0-1 | 1-3 | 10-18 | 1-2 | -- | 1-2 | -- | |
| Palm | -- | -- | -- | 1-6 | 32-47 | -- | 1-6 | 40-52 | 2-11 | -- | -- | -- | -- |
| Safflower | -- | -- | -- | -- | 5.2 | -- | 2.2 | 76.3 | 16.2 | -- | -- | -- | -- |
| Peanut | -- | -- | -- | 0.5 | 6-11 | 1-2 | 3-6 | 39-66 | 17-38 | -- | 5-10 | -- | -- |
| Cottonseed | -- | -- | -- | 0-3 | 17-23 | -- | 1-3 | 23-41 | 34-55 | -- | -- | 2-3 | -- |
| Corn | -- | -- | -- | 0-2 | 8-10 | 1-2 | 1-4 | 30-50 | 34-56 | -- | -- | 0-2 | -- |
| Sunflower | -- | -- | -- | -- | 6.0 | -- | 4.2 | 18.7 | 69.3 | 0.3 | 1.4 | -- | -- |
| Soybean | -- | -- | -- | 0.3 | 7-11 | 0-1 | 3-6 | 22-34 | 50-60 | 2-10 | 5-10 | -- | -- |
| Rapeseed | -- | -- | -- | -- | 2-5 | 0.2 | 1-2 | 10-15 | 10-20 | 5-10 | .9 | 50-60 | -- |
| Linseed | -- | -- | -- | 0.2 | 5-9 | -- | 0-1 | 9-29 | 8-29 | 45-67 | -- | -- | -- |
| Tung | -- | -- | -- | -- | -- | -- | -- | 4-13 | 8-15 | 72-88 | -- | -- | -- |

FIG. 6

EP 2 234 994 B1

**FIGURE 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4364743 A
- US 5389113 A
- US 2006026963 A
- WO 2008002643 A

**Non-patent literature cited in the description**

- **GELLER et al.** *Transactions of the American Society of Agricultural Engineers,* 1999, vol. 42, 859-862
- **STOURNAS et al.** *JACOS,* 1995, vol. 72, 433-437
- **MITTELBACH.** *Bioresource Technology,* 1996, vol. 56, 7-11
- **GRABOSKI.** *Prog. Energy Combustion Sci.,* 1998, vol. 24, 125-164
- **GOODRUM et al.** *Bioresource Technology,* 1996, vol. 56, 55-60
- **KNOTHE.** *Fuel Processing Technology,* 2005, vol. 86, 1059-1070
- **KINNEY et al.** *Fuel Processing Technology,* 2005, vol. 86, 1137-1147
- Total seed oil and fatty acid methyl ester contents of Cuphea accessions. **PHIPPEN, W.B. et al.** Industrial Crops and Products. Elsevier, 01 July 2006, vol. 24, 52-59